# DEMANDE DE BREVET EUROPEEN

(11) **EP 3 300 308 A1**
(43) Date de publication de la demande: **28.03.2018**
(21) Numéro de dépôt: 17191923.6
(22) Date de dépôt: 19.09.2017
(51) Int. Cl.: H04L 12/28, H04W 84/20

(54) **PROCÉDÉ ET SYSTEME D'APPAIRAGE D'UN APPAREIL ÉLECTRIQUE DOMESTIQUE À UN RÉSEAU DOMOTIQUE**

(30) Priorité: 23.09.2016 FR 1658952
(71) Demandeur: Texas De France, 13854 Aix en Provence (FR)
(72) Inventeur: BLOUIN, Philippe, 13510 Eguilles (FR); CARLOTTI, Charles, 04800 Greoux-Les-Bains (FR); BUREL, Florian, 13100 Aix-en-Provence (FR)
(74) Mandataire: Roman, Alexis

(57) **Abrégé**

L'invention a pour objet un procédé pour appairer un appareil électrique domestique à un réseau domotique. Ce procédé d'appairage ne nécessite pas l'utilisation d'une centrale domotique et n'implique aucune intervention sur l'appareil. Seul le terminal mobile est utilisé pour effectuer la procédure d'appairage. Pour différentier simplement et rapidement un appareil à appairer d'un autre appareil proche, une application enregistrée dans un terminal mobile choisit le niveau de réception radio le plus élevé lors du scannage d'un code-barres fixé sur l'appareil à appairer. Le niveau le plus élevé correspond à l'appareil associé au code-barres scanné dans la mesure où ce code-barres est situé à proximité du module de communication dudit appareil.

Elle concerne les techniques d'appairage d'appareils électriques domestiques à un réseau domotique en vue de piloter ces appareils à distance, depuis un terminal mobile par exemple.

## Description

### Domaine technique de l'invention.

L'invention a pour objet un procédé et un système pour appairer un appareil électrique domestique à un réseau domotique.

Elle concerne les techniques d'appairage d'appareils électriques domestiques à un réseau domotique en vue de piloter ces appareils à distance, depuis un terminal mobile par exemple.

### État de la technique.

De nombreuses habitations sont aujourd'hui équipées de réseaux domotiques permettant de contrôler, grâce à un terminal mobile (Smartphone, tablette tactile,...), des appareils électriques domestiques tels que des appareils de chauffage et/ou climatisation, des éclairages, des volets roulants, des portes, etc.

Les systèmes domotiques utilisent très souvent des liaisons sans fil pour piloter à distance ces différents appareils connectés. Généralement, lors de sa mise en service, chaque appareil doit être apparié à une unité centrale domotique.

Différents procédés d'appairage peuvent être utilisés :
- un interrupteur miniature, accessible dans chaque appareil, code l'adresse de l'unité centrale domotique. Toutefois, ce type d'interrupteur est généralement difficile d'accès et sa capacité d'adressage est limitée.
- un bouton dédié à l'appairage, accessible dans chaque appareil. En actionnant ce bouton, on active l'échange d'une adresse unique avec l'unité centrale. Cette technique est rapide est offre une bonne capacité d'adressage. Toutefois, elle nécessite l'implantation d'un bouton dédié et le suivi d'une procédure d'appairage qui doit être expliquée dans la notice d'utilisation de l'appareil.
- un menu spécifique d'appairage dans le cas d'un appareil équipé d'un afficheur alphanumérique. Cette technique est moins rapide que la précédente mais a une bonne capacité d'adressage. Et ici encore, cette technique nécessite le suivi d'une procédure d'appairage devant être expliquée dans la notice d'utilisation de l'appareil.

Toutes ces techniques nécessitent en outre une intervention de l'utilisateur sur l'appareil.

Le document US 2015/0021398 (WATERS) divulgue un réseau de scanneurs de code-barres capables de communiquer entre eux. Par exemple, si un scanneur à déjà scanné un code-barres, les autres scanneurs seront avertis et ne pourront plus scanner le même code-barres. Dans un autre exemple, il est décrit que le scanne d'un code-barres peut déclencher une caméra pour la prise d'une image de l'objet portant ledit code-barres. Cette technique n'est toutefois pas adaptée pour appairer des appareils électriques domestiques à un réseau domestique suivant une procédure d'appairage. L'invention vise à remédier à cet état de choses. En particulier, un objectif de l'invention est de proposer une technique d'appairage qui ne nécessite aucune intervention sur l'appareil.

Un autre objectif de l'invention est de proposer une technique d'appairage qui soit simple et rapide à mettre en oeuvre par un utilisateur.

### Divulgation de l'invention.

La solution proposée par l'invention est un procédé d'appairage d'un appareil électrique domestique à un réseau domotique pour piloter ledit appareil à distance, depuis un terminal mobile, lequel terminal est un téléphone intelligent ou une tablette électronique tactile, ledit procédé comprenant les étapes consistant à
- installer au moins deux appareils électriques domestiques au sein d'un local,
- équiper chaque appareil électrique domestique avec : - un module de communication adapté pour émettre et recevoir des signaux radiofréquences ; - un processeur relié au module de communication ; - une mémoire reliée au processeur, la mémoire stockant une application informatique qui, lorsqu'elle est mise en oeuvre par ledit processeur, est adaptée pour suivre une procédure d'appairage en fonction de signaux radiofréquences reçus par le module de communication dudit appareil ; - un code-barres,
- équiper le terminal mobile avec : - un scanneur de code-barres ; - un module de communication adapté pour émettre et recevoir des signaux radiofréquences ; - un processeur relié au scanneur de code-barres et au module de communication ; - une mémoire reliée au processeur, la mémoire stockant une application informatique qui, lorsqu'elle est mise en oeuvre par ledit processeur, est adaptée pour émettre des signaux radiofréquences pour appairer les appareils électriques domestiques au réseau domestique suivant une procédure d'appairage,
- initier la procédure d'appairage avec l'appareil électrique domestique dont le module de communication émet des signaux radiofréquences qui sont reçus par le module de communication du terminal mobile avec l'intensité la plus forte, ce module de communication étant celui de l'appareil électrique domestique dont le code-barres est scanné par ledit terminal et qui est le plus proche dudit terminal au moment du scannage,
- transmettre à l'appareil électrique domestique (2a₁) apparié des instructions pour piloter ledit appareil, lesquelles instructions sont transmises par le terminal mobile.

Ce procédé d'appairage ne nécessite pas l'utilisation d'une centrale domotique et n'implique aucune intervention sur l'appareil. Seul le terminal mobile est utilisé pour effectuer la procédure d'appairage. Pour différentier simplement et rapidement un appareil à appairer d'un autre appareil proche, l'application enregistrée dans le terminal mobile choisit le niveau de réception radio le plus élevé lors du scannage du code-barres. Le niveau le plus élevé correspond à l'appareil associé au code-barres scanné dans la mesure où ce code-barres est situé à proximité du module de communication dudit appareil.

D'autres caractéristiques avantageuses du procédé sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Le procédé peut comprendre une étape consistant à filtrer les signaux radiofréquences reçus par le module de communication du terminal mobile préalablement au scannage du code-barres, pour ne garder que les signaux radiofréquences émis dans une bande de fréquences prédéterminée qui est transmise audit terminal par un serveur informatique distant.
- Le procédé peut comprendre une étape consistant à émettre un signal sonore depuis le terminal mobile, quand le scannage d'un code-barres par ledit terminal est confirmé et/ou quand la procédure d'appairage est réalisée.
- Le procédé peut comprendre les étapes suivantes : - associer un identifiant unique au module de communication de chaque appareil électrique domestique ; - en réponse au scannage du code-barres, le terminal mobile génère et transmet une requête d'identifiant au module de communication de l'appareil électrique domestique associé audit code-barres ; - en réponse à la réception de la requête d'identifiant, le module de communication de l'appareil électrique domestique dont le code-barres est scanné renvoie au module de communication du terminal mobile son identifiant unique, de sorte que le module de communication dudit terminal dialogue exclusivement avec le module de communication dudit appareil jusqu'à la fin de la procédure d'appairage dudit appareil.
- Le procédé peut comprendre les étapes consistant à : - stocker dans le code-barres des caractéristiques techniques de l'appareil électrique domestique auquel ledit code-barres est associé, ces caractéristiques techniques étant choisies dans la liste suivante : fabricant, modèle, référence de l'appareil, puissance, couleur ; - en réponse au scannage du code-barres, afficher sur un écran du terminal mobile, la photo de l'appareil électrique domestique associé audit code-barres.

Un autre aspect de l'invention concerne un système pour appairer un appareil électrique domestique à un réseau domotique et piloter ledit appareil à distance, depuis un terminal mobile, lequel terminal est un téléphone intelligent ou une tablette électronique tactile, ledit système comprenant :
- au moins deux appareils électriques domestiques installés au sein d'un local,
- chaque appareil électrique domestique étant équipé : - d'un module de communication adapté pour émettre et recevoir des signaux radiofréquences ; - d'un processeur relié au module de communication ; - d'une mémoire reliée au processeur, la mémoire stockant une application informatique qui, lorsqu'elle est mise en oeuvre par ledit processeur, est adaptée pour suivre une procédure d'appairage en fonction de signaux radiofréquences reçus par le module de communication dudit appareil ; - un code-barres.
- le terminal mobile est équipé : - d'un scanneur de code-barres ; - d'un module de communication adapté pour émettre et recevoir des signaux radiofréquences ; - d'un processeur relié au scanneur de code-barres et au module de communication ; - d'une mémoire reliée au processeur, la mémoire stockant une application informatique qui, lorsqu'elle est mise en oeuvre par ledit processeur, est adaptée pour émettre des signaux radiofréquences pour appairer les appareils électriques domestiques au réseau domestique suivant une procédure d'appairage,

- le terminal mobile initie la procédure d'appairage avec l'appareil électrique domestique dont le module de communication émet des signaux radiofréquences qui sont reçus par le module de communication du terminal mobile avec l'intensité la plus forte, ce module de communication étant celui de l'appareil électrique domestique dont le code-barres est scanné par ledit terminal et qui est le plus proche dudit terminal au moment du scannage,
- le terminal mobile est adapté pour transmettre à l'appareil électrique domestique apparié, des instructions pour piloter ledit appareil.

D'autres caractéristiques avantageuses du système sont listées ci-dessous. Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Les modules de communication des appareils électriques domestiques et le module de communication du terminal mobile sont préférentiellement des modules de communication Bluetooth.
- Le code-barres est préférentiellement positionné à proximité immédiate du module de communication de l'appareil électrique domestique auquel ledit code-barres est associé.
- Les appareils électriques domestiques sont avantageusement des radiateurs électriques.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise un local comprenant plusieurs pièces dans lesquelles sont installés différents appareils électroniques,
- la figure 2 illustre de manière simplifiée la structure informatique d'un appareil électrique domestique utilisé dans l'invention,
- la figure 3 schématise un exemple de système dans lequel peut être mis en oeuvre le procédé conforme à l'invention,
- la figure 4 illustre de manière simplifiée la structure informatique d'un terminal mobile utilisé dans l'invention,
- la figure 5 illustre de manière simplifiée la structure d'un serveur informatique utilisé dans l'invention,
- la figure 6 est un organigramme illustrant différentes étapes mises en oeuvre dans le procédé objet de l'invention.

### Modes préférés de réalisation de l'invention.

Le procédé objet de l'invention consiste en une séquence cohérente d'étapes permettant d'aboutir à un résultat souhaité. Ces étapes engendrent des manipulations d'éléments physiques, notamment des signaux (électriques ou magnétiques) capables d'être stockés, transférés, combinés, comparés, etc.

Le procédé est mis en oeuvre par l'intermédiaire d'applications informatiques exécutées respectivement par un processeur d'un terminal mobile, d'un appareil électronique, ou d'un serveur informatique. Par souci de clarté, il faut comprendre au sens de l'invention que « *le terminal*/*appareil*/*serveur fait quelque chose »* signifie « *l'application informatique exécutée par le processeur du terminal*/*appareil*/*serveur fait quelque chose* »*.* Tout comme « *l'application informatique fait quelque chose* » signifie « *l'application informatique exécutée par le processeur du terminal*/*appareil*/*serveur fait quelque chose ».*

Encore par souci de clarté, la présente invention fait référence à un ou plusieurs « *processus informatiques logiques* ». Ces derniers correspondent aux actions ou résultats obtenus par l'exécution des instructions des différentes applications informatiques. Aussi, il faut également comprendre au sens de l'invention que « *un processus informatique logique est adapté pour faire quelque chose* » signifie « *les instructions d'une application informatique exécutées par un processeur font quelque chose* ».

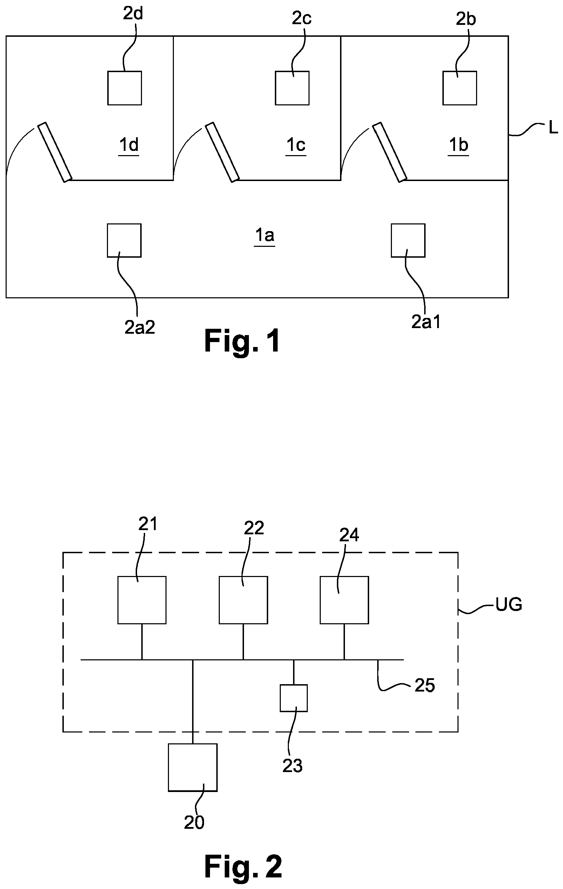

Sur la figure 1, est représenté un local 1 qui peut être un bâtiment, une habitation, un bureau, un hôtel, etc. Ce local L est divisé en zones géographiques ou pièces 1a, 1b, 1c, 1d. La zone 1a correspond par exemple au salon d'une habitation, les zones 1b et 1c à des chambres, et la zone 1d à une salle de bain. Chaque zone 1a, 1b, 1c, 1d, présente un ou plusieurs appareils électriques domestiques, respectivement 2a₁, 2a₂, 2b, 2c, 2d. Ces appareils électriques domestiques sont préférentiellement des appareils de chauffage et/ou climatisation. Certains d'entre eux peuvent toutefois se présenter sous la forme d'autres appareils électriques domestiques, tels que des éclairages, des volets roulants, des portes, etc.

La figure 2 schématise un exemple de réalisation d'un appareil électrique domestique utilisé dans l'invention. Sur cette figure, l'appareil est un radiateur électrique comprenant un élément chauffant 20, par exemple du type coeur de chauffe en fonte avec résistance électrique. L'appareil 2 comprend également une unité de gestion électronique UG comprenant un ou plusieurs processeurs ou microprocesseurs 21, une ou plusieurs mémoires 22, un module de communication 23, éventuellement une batterie 24, qui sont mutuellement connectés via un bus commun 25. Une ou plusieurs applications informatiques - ou programmes informatiques - sont stockées dans la ou les mémoires 22 et dont les instructions (ou codes), lorsqu'elles sont exécutées par le ou les processeurs 21 permettent de réaliser les fonctionnalités décrites plus avant dans la description et notamment le suivi de la procédure d'appairage décrit plus avant dans la description.

Entre autres fonctions, le processeur 21 est adapté pour contrôler le fonctionnement de l'appareil électrique domestique. Dans le cas où ce dernier est un radiateur, il permet par exemple de fournir un signal de puissance électrique pour activer l'élément chauffant 20 à une température souhaitée.

La ou les mémoires 22 doivent être considérées comme un dispositif de stockage également adapté pour stocker des données et/ou des fichiers de données. Il peut s'agir d'une mémoire native ou d'une mémoire rapportée telle qu'une carte Secure Digital (SD).

Le module de communication 23 est adapté pour recevoir des signaux radiofréquences transmis sans fil à partir, notamment, du terminal mobile 3 décrit plus avant dans la description. Le module de communication 23 est également adapté pour émettre des signaux radiofréquences pour communiquer sans fil avec le terminal mobile 3 et/ou avec les autres appareils 2a₁, 2a₂, 2b, 2c, 2d installés dans le local L. Dans le but de simplifier la conception, ces signaux radiofréquences sont préférentiellement des signaux utilisant un protocole Bluetooth. Toutefois, d'autres protocoles tels que : ISM, Wifi, ANT, ZIGBEE, .., pouvant être utilisés. On utilise avantageusement un module Bluetooth NRF51422 BLE+ANT fabriqué par la société NORDICSEMI®.

La batterie 24, telle qu'une pile au lithium ou une pile solaire plate, peut assurer l'alimentation électrique des composants électroniques 21, 22, 23. Cette alimentation électrique peut toutefois être directement assurée par celle de l'appareil.

Le processeur 21, la mémoire 22, le module de communication 23, et éventuellement la batterie 24, sont préférentiellement fixés sur un circuit électronique déjà intégré dans l'appareil, par exemple sur le circuit électronique d'un thermostat.

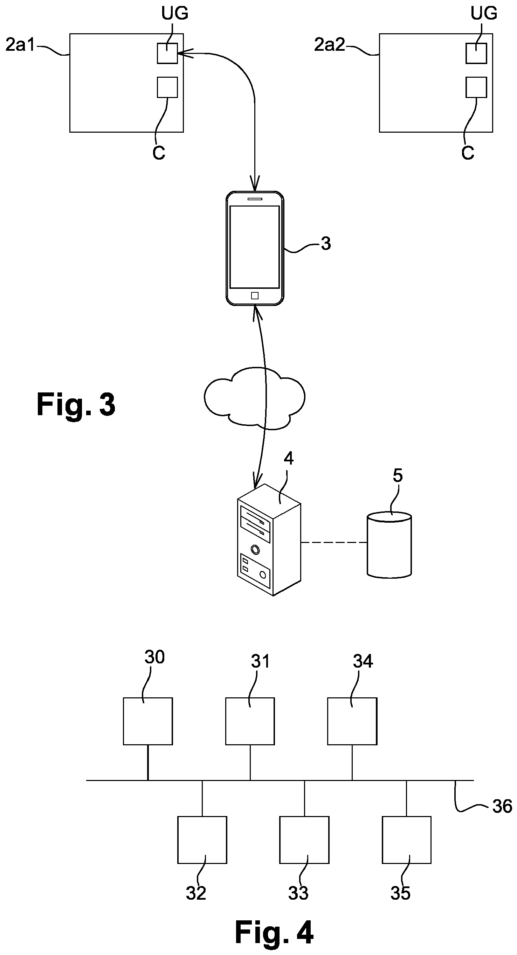

Sur la figure 3, un code-barres C est fixé sur une face des appareils électriques domestiques 2a₁ et 2a₂. Préférentiellement, le code-barres C est positionné sur l'appareil de manière à ce qu'il soit à proximité immédiate du module de communication 23, préférentiellement directement en vis-à-vis de ce dernier. On comprend que chaque appareil 2a₁, 2a₂, 2b, 2c, 2d installé dans le local L peut être équipé d'un code-barres C. Ce dernier peut être en une dimension. Toutefois, on utilise préférentiellement un code-barres en deux dimensions ou code matriciel du type code QR pour sa capacité de stockage d'informations. Chaque code-barres C stocke avantageusement un certain nombre d'informations dont les caractéristiques techniques de l'appareil auquel il est associé telles que : type (chauffage et/ou climatisation, éclairages, volets roulants, portes, ...), fabricant, modèle (ou référence de l'appareil), puissance, couleur de l'appareil, etc.

En sortie d'usine, les appareils 2a₁, 2a₂, 2b, 2c, 2d ne sont pas appairés afin qu'ils puissent être appairés facilement par l'utilisateur comme cela est décrit plus avant dans la description.

La mise en oeuvre du procédé objet de l'invention fait également appel à l'utilisation d'au moins un terminal mobile 3 (figures 3) se présentant préférentiellement sous la forme d'un téléphone mobile ou Smartphone (téléphone intelligent) du type iPhone®, Samsung Galaxy®, ou sous la forme d'un autre terminal électronique, par exemple une tablette électronique tactile (du type iPad®, Samsung GalaxyTab®, fonctionnant avec un système d'exploitation de type Windows, Mac, iOS, Android, etc. Le terminal mobile 3 est adapté pour être exploité par un utilisateur, qui, en pratique, est une personne physique.

En se rapportant à la figure 4, le terminal mobile 3 comprend notamment un ou plusieurs processeurs ou microprocesseurs 30, une ou plusieurs mémoires 31, une interface réseau 32, une interface graphique 33, un module de communication 34, un scanneur de code-barres 35, qui sont mutuellement connectés via un bus commun 36. Une ou plusieurs applications informatiques - ou programmes informatiques - sont stockées dans la ou les mémoires 31 et dont les instructions (ou codes), lorsqu'elles sont exécutées par le ou les processeurs 30 permettent de réaliser les fonctionnalités décrites plus avant dans la description et notamment l'émission de signaux pour appairer les appareils électriques domestiques 2a₁, 2a₂, 2b, 2c, 2d au réseau domestique suivant une procédure d'appairage.

La ou les mémoires 31 doivent être considérées comme un dispositif de stockage également adapté pour stocker des données et/ou des fichiers de données. Il peut s'agir d'une mémoire native ou d'une mémoire rapportée telle qu'une carte Secure Digital (SD).

Le processeur 30 et la mémoire 31 peuvent être intégrés dans une carte SIM (de l'anglais Suscriber Identity Module), cette dernière étant connectée au bus 36.

Dans l'exemple de la figure 3, l'interface réseau 32 est adaptée pour établir une communication avec un serveur distant 4 décrit plus avant dans la description. L'interface réseau 32 peut par exemple comprendre un module GSM fournissant une connectivité de réseau au terminal mobile 3. De manière générale, l'interface réseau 32 a pour fonction de gérer les connexions entre le terminal mobile 3 et un réseau R de télécommunication via les technologies de réseau telles que, mais sans s'y limiter, GSM, EDGE, 2G, 3G, 4G, etc.

L'interface graphique 33 offre à l'utilisateur la possibilité de saisir, sélectionner et/ou entrer des données ou des instructions. Il se présente par exemple sous la forme d'un écran tactile, d'un écran connecté à un clavier, etc.

Le module de communication 34 est adapté pour recevoir et émettre des signaux radiofréquences pour communiquer sans fil avec les appareils 2a1, 2a2, 2b, 2c, 2d installés dans le local L. Ces signaux radiofréquences sont préférentiellement des signaux utilisant un protocole Bluetooth, d'autres protocoles tels que : ISM, Wifi, ANT, ZIGBEE, .., pouvant toutefois être utilisés.

Le scanneur de code-barres 35 se présente avantageusement sous la forme d'un lecteur optique, par exemple du type appareil photo intégré dans le terminal mobile 3, lequel lecteur est associé à une application informatique de lecture. En pratique, l'utilisateur ouvre son application de lecture depuis son terminal mobile 3 et vise le code-barres avec l'appareil photo dudit terminal.

L'utilisateur peut être amené à installer une ou plusieurs applications informatiques dans son terminal mobile 3 pour mettre en oeuvre tout ou partie de l'invention depuis ledit terminal, et notamment la procédure d'appairage. Ces applications informatiques peuvent être préinstallées sur le terminal 3. L'utilisateur a toutefois la possibilité de rechercher ces applications informatiques sur une boutique en ligne telles que Google Play®, Itunes® ou sur un site internet dédié, et ensuite les télécharger sur son terminal 3.

La mise en oeuvre du procédé objet de l'invention peut en outre faire appel à l'utilisation d'un serveur informatique 4. Ce dernier peut consister en un serveur physique ou, dans certains cas, être composé de plusieurs ordinateurs distincts qui communiquent et interagissent sur un réseau pour exécuter les fonctions décrites plus avant dans la description. Ce serveur 4 est préférentiellement « distant » dans le sens où il n'est pas localisé dans le local L, mais à l'extérieur de celui-ci.

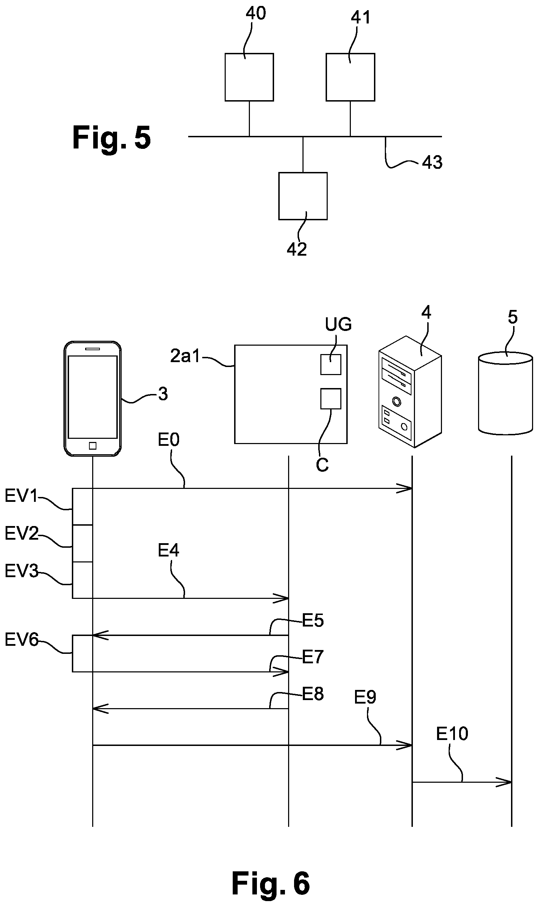

En se rapportant à la figure 5, le serveur 4 comprend notamment un ou plusieurs processeurs ou microprocesseurs 40, une ou plusieurs mémoires 41, une interface réseau 42, qui sont mutuellement connectées via un bus 43. Une ou plusieurs applications informatiques - ou programmes informatiques - sont stockées dans la ou les mémoires 41 et dont les instructions, lorsqu'elles sont exécutées par le ou les processeurs 40 permettent de réaliser les fonctionnalités décrites plus avant dans la description. Plusieurs caractéristiques techniques des appareils électriques domestiques d'un ou plusieurs fabricants, notamment les photos desdits appareils, peuvent également être stockées dans la ou les mémoires 41.

L'interface réseau 42 est une interface de communication filaire ou sans fil adaptée pour établir une communication avec le terminal mobile 3, via le réseau R, et avec une base de données informatique 5.

Une application informatique est installée dans le serveur 4 pour mettre en oeuvre une ou plusieurs étapes du procédé d'appairage comme cela est expliqué plus avant dans la description. Cette application informatique peut être préinstallée sur le serveur 4 ou être téléchargée ultérieurement.

La base de données informatique 5 peut être hébergée directement dans le serveur 4, ou dans un autre serveur ou dans un réseau de serveur type Cloud Computing, ou dans un ordinateur. Pour sécuriser l'échange de données entre le serveur 4 et la base de données 5, la connexion entre ces deux éléments peut être réalisée au travers d'un réseau privé virtuel VPN, d'un réseau internet sécurisé, ou d'une liaison filaire. Il est à noter que les caractéristiques techniques des appareils électriques domestiques stockées dans la mémoire 41 peuvent l'être dans la base de données 5 (en complément ou en substitution de ladite mémoire).

Différentes étapes du procédé d'appairage conforme à l'invention vont maintenant être décrites en référence aux figures 3 et 6. Nous prendrons comme hypothèse que l'utilisateur souhaite appairer un nouvel appareil à un réseau domotique, par exemple l'appareil 2a₁,

Dans une étape E0, l'utilisateur utilise son terminal 3 pour se connecter au serveur distant 4 et télécharger l'application informatique d'appairage. Ce téléchargement peut être conditionné à une procédure préalable d'inscription durant laquelle l'utilisateur renseigne un certain nombre d'informations depuis l'interface graphique 33 de son terminal mobile 3 : nom, prénom, adresse, moyen de communication, etc.

A l'événement EV1, l'utilisateur paramètre son réseau domotique depuis son terminal mobile 3. Chaque réseau domotique est associé à un identifiant qui lui est propre ReseauID. Lors du paramétrage, plusieurs scénarios sont possibles :
- L'utilisateur a déjà créé un réseau domotique et souhaite simplement appairer le nouvel appareil 2a₁ à ce réseau domotique existant.
- L'utilisateur n'a pas encore créé son réseau domotique mais a été invité par un tiers qui, lui, a déjà créé son réseau domotique. Il peut par exemple s'agir d'un locataire (l'utilisateur) qui a été invité par son propriétaire (le tiers).
- L'utilisateur n'a pas encore créé son réseau domotique et n'a pas été invité par un tiers. Depuis l'interface graphique 33 de son terminal mobile 3, l'utilisateur construit son réseau domotique en rajoutant ou en enlevant des pièces (salon 1a, chambre 1b, chambre 1c, salle de bain 1c, ...). Chaque pièce du local L concernée est automatiquement affectée à un identifiant (RoomID) qui lui est propre. L'utilisateur peut encore renseigner le volume éventuel de la pièce concernée ainsi qu'un réglage de thermostat souhaité : température et/ou plages horaires de fonctionnement et/ou mode de fonctionnement (mode « éco », mode « confort », ...).

A l'issu de l'événement EV1, l'appareil 2a₁ n'est pas encore appairé au réseau domotique. Il émet toutefois en permanence des signaux radiofréquences via son module de communication 23, ces signaux radiofréquences contenant une information indiquant qu'il est appairable et sont émis dans une bande de fréquences propre au constructeur dudit appareil. La norme Bluetooth autorise par exemple des constructeurs d'appareils à se réserver une certaine bande de fréquences les signaux Bluetooth émis. Le terminal mobile 3 reçoit tous les signaux radiofréquences émis dans sa zone de réception (par exemple par une tablette, par une montre connectée, ...) mais ne filtre, pour initier la procédure d'appairage, que ceux émis dans la bande de fréquences propre au constructeur de l'appareil 2a₁ (événement EV2). Si deux appareils 2a₁ et 2a₂ proviennent du même constructeur, le terminal mobile 3 ne garde que les signaux radiofréquences émis par les modules de communication 23 de ces deux appareils. Les autres signaux radiofréquences qui ne sont pas émis dans la bande de fréquences prescrites sont rejetés. Cette bande de fréquences est transmise au terminal mobile 3 par le serveur 4 durant l'étape E0. Le serveur 4 ayant lui-même préalablement reçu cette bande de fréquences par un ou plusieurs constructeurs d'appareils. En outre, chaque module de communication 23 est associé à un identifiant unique (UnicID) stocké dans ledit module ou dans la mémoire 22. Cet identifiant unique est l'équivalent d'une adresse MAC (pour l'acronyme anglais Media Access Control). Préférentiellement, les signaux émis par des appareils déjà appairés sont également filtrés par le terminal mobile 3. Ce dernier sait qu'un appareil est déjà appairé quand les signaux qu'il émet contiennent le RoomDevicelD mentionné plus avant dans la description.

Conformément à l'invention, la procédure d'appairage est initiée avec l'appareil électrique domestique dont le module de communication 23 émet des signaux radiofréquences qui sont reçus par le terminal mobile 3 avec l'intensité la plus forte. Pour s'assurer que la procédure d'appairage s'initie avec l'appareil 2a₁ (et non avec un autre appareil 2a₂ proche), l'utilisateur scanne le code-barres C de cet appareil (événement EV3). Le module de communication 23 de ce dernier étant le plus proche du terminal mobile 3 au moment du scannage, les signaux radiofréquences qu'il émet sont reçus par le terminal mobile 3 avec l'intensité la plus forte. Ainsi, le terminal mobile 3 sélectionne automatiquement le module de communication 23 de l'appareil 2a₁. L'autre l'appareil 2a₂ étant plus éloigné du terminal mobile 3, son module de communication émet des signaux radiofréquences qui sont reçus par ledit terminal avec une intensité plus faible. Cet autre l'appareil 2a₂ ne sera donc pas retenu par le terminal mobile 3 pour cette procédure d'appairage.

Le scannage du code-barres C peut également s'accompagner de l'acquisition, par le terminal mobile 3, des informations stockées dans ledit code-barres. La référence (ou modèle) de l'appareil 2a₁ peut s'afficher sur l'écran du terminal mobile 3 de sorte que l'utilisateur puisse vérifier qu'il s'agit bien du bon appareil à appairer. Dans ce cas, le terminal mobile 3 peut requérir de l'utilisateur qu'il confirme l'appairage de l'appareil dont la référence et/ou le modèle sont affichés sur l'écran. De même, le terminal mobile 3 peut requérir de l'utilisateur qu'il prenne en photo l'appareil 2a₁ depuis ledit terminal. La photo est alors affichée sur l'écran de ce dernier. Cette étape permet à l'utilisateur, durant la procédure d'appairage, de facilement reconnaître l'appareil 2a₁ dans son environnement, ce qui est particulièrement appréciable dans le cas d'appareils identiques (même référence et/ou modèle) dans une même pièce.

Pour améliorer l'ergonomie de la procédure, le terminal mobile 3 peut émettre un signal sonore pour confirmer le scannage du code-barres C. Ce signal sonore permet de s'assurer du scannage du code-barres C sans que l'utilisateur visualise l'écran du terminal mobile 3. En effet, il peut arriver que le code-barres C soit placé sur un côté peu accessible de l'appareil 2a₁.

En réponse au scannage du code-barres C, le terminal mobile 3 génère et transmet une requête d'identifiant UnicID au module de communication 23 de l'appareil 2a₁ (étape E4).

En réponse à cette requête, le module de communication 23 de l'appareil 2a₁ renvoi au terminal mobile 3 son UnicID (étape E5). Le module de communication 34 du terminal mobile 3 dialogue alors exclusivement avec le module de communication 23 de l'appareil 2a₁ qui est maintenant identifié. L'utilisateur peut ainsi s'éloigner de l'appareil 2a₁, son terminal mobile 3 ne communiquera qu'avec le module de communication 23 de l'appareil 2a₁. Pour améliorer l'ergonomie de la procédure, le terminal mobile 3 peut émettre un signal sonore pour confirmer sa connexion à l'appareil 2a₁.

Depuis l'interface graphique 33 de son terminal mobile 3, l'utilisateur attribue à l'appareil 2a₁ un identifiant réseau RoomDevicelD (événement EV6). Le RoomDevicelD est préférentiellement composé du RoomID de la pièce dans laquelle est installé ledit appareil (ex : RoomID du salon 1a) et d'un numéro attribué audit appareil (DeviceID). En pratique, le DeviceID est un nombre compris entre 1 et 10 car il y a au plus 10 appareils dans chaque pièce du local L. En se référant à l'exemple de la figure 1, deux appareils 2a₁ et 2a₂ étant installés dans le salon 1a, le DeviceID de l'appareil 2a₁ pourra être égal à « 1 » si l'autre appareil 2a₂ n'est pas encore appairé ou égal à « 2 » dans le cas contraire. L'utilisateur a donc la possibilité d'appairer plusieurs appareils dans une même pièce. A l'issue de l'événement EV6, l'appairage de l'appareil 2a₁ est effectué. Un signal sonore peut alors être émis depuis le terminal mobile 3, pour indiquer à l'utilisateur la réalisation de cet appairage.

A l'étape E7, le terminal mobile 3 transmet à l'appareil 2a₁ un certain nombre d'informations et/ou d'instructions permettant de piloter ledit appareil : le ReseauID, le RoomDevicelD, éventuellement un réglage prédéfini de thermostat (température et/ou plages horaires de fonctionnement et/ou mode de fonctionnement. Ces informations sont stockées dans la mémoire 22 de l'appareil 2a₁. Cette programmation est donc définie a posteriori, le processus informatique logique associé étant transmis à l'appareil 2a₁ par le terminal mobile 3.

Dans une étape E8, l'appareil 2a₁ peut également transmettre au terminal mobile 3 des informations telles que : version de l'application informatique enregistrée dans sa mémoire 22 (pour d'éventuelles mises à jour).

L'utilisateur réitère les étapes E4, E5, E7, E8 et les événements EV1, EV2, EV3, EV6 pour chaque autre appareil 2a₂, 2b, 2c, 2d qu'il souhaite appairé.

Dans l'étape E9, lorsque l'appairage est effectué, le terminal mobile 3 transmet au serveur 4 : les données relatives au réseau domotique (ReseauID, RoomID, volume éventuel de chaque pièce, réglage de thermostat pour chaque pièce, ...) ; la liste des appareils et leurs caractéristiques (UnicID, RoomDevicelD, version des applications informatiques respectives, informations stockées dans les codes-barres respectifs, ...). L'étape E9 peut être initiée automatiquement dès que l'utilisateur quitte l'application d'appairage ou suite à l'activation d'une touche dédiée sur son terminal mobile 3. En parallèle de cette étape E9, le terminal mobile 3 peut récupérer du serveur 4 certaines caractéristiques des appareils appairés, dont leur photo qui peut s'afficher sur l'écran dudit terminal. Ces données du réseau domotique sont ensuite stockées dans la base de données 5 (étape E10) et réutilisables par l'utilisateur (dans le cas où il souhaite appairer ultérieurement un nouvel appareil) ou par un tiers (suite à une invitation lancée par l'utilisateur).

Les appareils 2a₁, 2a₂, 2b, 2c, 2d, appairés au réseau domotique peuvent communiquer pour véhiculer des informations entre eux comme cela est décrit dans la demande de brevet WO 2016/097652 (TEXAS).

## Revendications

1. Procédé d'appairage d'un appareil électrique domestique à un réseau domotique pour piloter ledit appareil à distance, depuis un terminal mobile (3), lequel terminal est un téléphone intelligent ou une tablette électronique tactile, ledit procédé comprenant les étapes consistant à :
- installer au moins deux appareils électriques domestiques (2a₁, 2a₂) au sein d'un local (L),
- équiper chaque appareil électrique domestique (2a₁, 2a₂) avec :
∘ un module de communication (23) adapté pour émettre et recevoir des signaux radiofréquences,
∘ un processeur (21) relié au module de communication (23),
∘ une mémoire (22) reliée au processeur (21), la mémoire (22) stockant une application informatique qui, lorsqu'elle est mise en oeuvre par ledit processeur (21), est adaptée pour suivre une procédure d'appairage en fonction de signaux radiofréquences reçus par le module de communication (23) dudit appareil,
∘ un code-barres (C),
- équiper le terminal mobile (3) avec :
∘ un scanneur de code-barres (35),
∘ un module de communication (34) adapté pour émettre et recevoir des signaux radiofréquences,
∘ un processeur (30) relié au scanneur de code-barres (35) et au module de communication (34),
∘ une mémoire (31) reliée au processeur (30), la mémoire stockant une application informatique qui, lorsqu'elle est mise en oeuvre par ledit processeur, est adaptée pour émettre des signaux radiofréquences pour appairer les appareils électriques domestiques (2a₁, 2a₂) au réseau domestique suivant une procédure d'appairage,
- initier la procédure d'appairage avec l'appareil électrique domestique (2a₁) dont le module de communication (23) émet des signaux radiofréquences qui sont reçus par le module de communication (34) du terminal mobile (3) avec l'intensité la plus forte, ce module de communication (23) étant celui de l'appareil électrique domestique (2a₁) dont le code-barres (C) est scanné par ledit terminal et qui est le plus proche dudit terminal au moment du scannage
- transmettre à l'appareil électrique domestique (2a₁) apparié des instructions pour piloter ledit appareil, lesquelles instructions sont transmises par le terminal mobile (3).

2. Procédé selon la revendication 1, comprenant une étape consistant à construire un réseau domotique depuis le terminal mobile (3), en :
- créant une ou plusieurs pièces (1a, 1b, 1c, 1d),
- affectant, à chacune des pièces créées (1a, 1b, 1c, 1 d), un identifiant qui lui est propre,
- renseignant pour chacune des pièces 1a, 1b, 1c, 1d) : le volume de ladite pièce et un réglage de thermostat souhaité.

3. Procédé selon l'une des revendications précédentes, comprenant une étape consistant à filtrer les signaux radiofréquences reçus par le module de communication (34) du terminal mobile (3) préalablement au scannage du code-barres (C), pour ne garder que les signaux radiofréquences émis dans une bande de fréquences prédéterminée qui est transmise audit terminal par un serveur informatique distant (4).

4. Procédé selon l'une des revendications précédentes, comprenant une étape consistant à émettre un signal sonore depuis le terminal mobile (3), quand le scannage d'un code-barres (C) par ledit terminal est confirmé et/ou quand la procédure d'appairage est réalisée.

5. Procédé selon l'une des revendications précédentes, comprenant les étapes suivantes :
- associer un identifiant unique au module de communication (23) de chaque appareil électrique domestique (2a₁, 2a₁),
- en réponse au scannage du code-barres (C), le terminal mobile (3) génère et transmet une requête d'identifiant au module de communication (23) de l'appareil électrique domestique (2a₁) associé audit code-barres (C),
- en réponse à la réception de la requête d'identifiant, le module de communication (23) de l'appareil électrique domestique (2a₁) dont le code-barres (C) est scanné renvoie au module de communication (34) du terminal mobile (3) son identifiant unique, de sorte que le module de communication (34) dudit terminal dialogue exclusivement avec le module de communication (23) dudit appareil jusqu'à la fin de la procédure d'appairage dudit appareil.

6. Procédé selon l'une des revendications précédentes, comprenant les étapes consistant à :
- stocker dans le code-barres (C) des caractéristiques techniques de l'appareil électrique domestique (2a₁, 2a₂) auquel ledit code-barres est associé, ces caractéristiques techniques étant choisies dans la liste suivante : référence de l'appareil, fabricant, modèle, puissance, couleur,
- en réponse au scannage du code-barres (C), afficher sur un écran du terminal mobile (3), la photo de l'appareil électrique domestique (2a₁) associé audit code-barres.

7. Système pour appairer un appareil électrique domestique à un réseau domotique et piloter ledit appareil à distance, depuis un terminal mobile (3), lequel terminal est un téléphone intelligent ou une tablette électronique tactile, ledit système comprenant :
- au moins deux appareils électriques domestiques (2a₁, 2a₂) installés au sein d'un local (L),
- chaque appareil électrique domestique (2a₁, 2a₂) étant équipé :
∘ d'un module de communication (23) adapté pour émettre et recevoir des signaux radiofréquences,
∘ d'un processeur (21) relié au module de communication (23),
∘ d'une mémoire (22) reliée au processeur (21), la mémoire (22) stockant une application informatique qui, lorsqu'elle est mise en oeuvre par ledit processeur (21), est adaptée pour suivre une procédure d'appairage en fonction de signaux radiofréquences reçus par le module de communication (23) dudit appareil,
∘ un code-barres (C),
- le terminal mobile (3) est équipé :
∘ d'un scanneur de code-barres (35),
∘ d'un module de communication (34) adapté pour émettre et recevoir des signaux radiofréquences,
∘ d'un processeur (30) relié au scanneur de code-barres (35) et au module de communication (34),
∘ d'une mémoire (31) reliée au processeur (30), la mémoire stockant une application informatique qui, lorsqu'elle est mise en oeuvre par ledit processeur, est adaptée pour émettre des signaux radiofréquences pour appairer les appareils électriques domestiques (2a₁, 2a₂) au réseau domestique suivant une procédure d'appairage,
- le terminal mobile (3) initie la procédure d'appairage avec l'appareil électrique domestique (2a₁) dont le module de communication (23) émet des signaux radiofréquences qui sont reçus par le module de communication (34) du terminal mobile (3) avec l'intensité la plus forte, ce module de communication (23) étant celui de l'appareil électrique domestique (2a₁) dont le code-barres (C) est scanné par ledit terminal et qui est le plus proche dudit terminal au moment du scannage
- le terminal mobile (3) est adapté pour transmettre à l'appareil électrique domestique (2a₁) apparié, des instructions pour piloter ledit appareil.

8. Système selon la revendication 7, dans lequel les modules de communication (23) des appareils électriques domestiques (2a₁, 2a₂) et le module de communication (34) du terminal mobile (3) sont des modules de communication Bluetooth.

9. Système selon l'une des revendications 7 ou 8, dans lequel le code-barres (C) est positionné à proximité immédiate du module de communication (23) de l'appareil électrique domestique (2a₁, 2a₂) auquel ledit code-barres est associé.

10. Système selon l'une des revendications 7 à 9, dans lequel les appareils électriques domestiques (2a₁, 2a₂) sont des radiateurs électriques, le terminal mobile (3) étant adapté pour transmettre à l'appareil électrique domestique (2a₁) apparié des instructions pour un réglage prédéfini de thermostat.
